# EUROPÄISCHE PATENTSCHRIFT

(11) **EP 1 255 155 B1**
(45) Veröffentlichungstag und Bekanntmachung des Hinweises auf die Patenterteilung: **13.08.2008**
(21) Anmeldenummer: 02009704.4
(22) Anmeldetag: 29.04.2002
(51) Int. Cl.: G02F 1/1339

(54) **Flüssigkristallanzeigezelle**
Liquid crystal display cell
Cellule d'affichage à cristal liquide

(30) Priorität: 30.04.2001 DE 10121177
(43) Veröffentlichungstag der Anmeldung: 06.11.2002
(73) Patentinhaber: AEG Gesellschaft für moderne Informationssysteme mbH, 89077 Ulm (DE)
(72) Erfinder: Bayrle, Reiner, Dr., 89129 Langenau (DE); Bader, Otto, 88447 Warthausen (DE); Bitter, Thomas, Dr., 73342 Bad Ditzenbach (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 311 441
- US-A- 5 851 605
- PATENT ABSTRACTS OF JAPAN vol. 1996, no. 0, 31. Mai 1996 (1996-05-31) -& JP 08 015708 A (CASIO COMPUT CO LTD), 19. Januar 1996 (1996-01-19)
- "STANDARD TEST METHOD FOR COEFFICIENT OF LINEAR THERMAL EXPANSION OF PLASTICS BETWEEN-30 DEG C AND 30 DEG C WITH A VITREOUS SILICA DILATOMETER" , ASTM DESIGNATION, ASTM INTERNATIOANL, US, PAGE(S) 1-5 XP001153342 * Seite 4, linke Spalte; Tabelle 1 *
- PATENT ABSTRACTS OF JAPAN vol. 1997, no. 03, 31. März 1997 (1997-03-31) -& JP 08 304832 A (CITIZEN WATCH CO LTD), 22. November 1996 (1996-11-22)

## Beschreibung

Die Erfindung betrifft eine Zelle in einer Flüssigkristallanzeige (Liquid Crystal Display(LCD)-Zelle) gemäß dem Oberbegriff des Anspruchs 1, insbesondere für LCD-Anzeigetafeln, die in einem weiten Temperaturbereich arbeiten.

Mobile LCD-Anzeigen wie etwa in Bussen oder Zügen bzw. stationäre LCD-Anzeigen wie beispielsweise in Bahnhöfen umfassen eine oder mehrere elektrisch ansteuerbare LCD-Zellen. Eine einzelne LCD-Zelle umfaßt dabei zwei parallel hintereinander angeordnete transparente Platten, zwischen denen sich ein Flüssigkristall befindet. An den Platten sind Elektroden angeordnet, beispielsweise als transparente Elektrodenschicht, die aus mehreren einzeln ansteuerbaren Elementen bestehen kann. Liegt zwischen den Elektroden bzw. den einzelnen Elementen eine Spannung an, erscheinen Bereiche der LCD-Zelle hell ("Normally-blackmode LCD") bzw. dunkel, ohne Spannung entsprechend umgekehrt dunkel bzw. hell.

Bei nicht horizontal angeordneten LCD-Zellen sammelt sich der Flüssigkristall infolge der Gravitation im unteren Bereich, wodurch sich zum einen die Dichteverteilung innerhalb des Kristalls in Richtung parallel zu den beiden Platten ändert und zum anderen die transparenten Platten in diesem Bereich auseinandergedrückt und im oberen Bereich entsprechend zusammengezogen werden. Gleiches gilt natürlich entsprechend für Trägheits- statt Gravitationskräften infolge von Beschleunigungen einer horizontal oder vertikal montierten mobilen Anzeige. Dies führt zu unerwünschten Farbunregelmäßigkeiten innerhalb des Anzeigebereichs.

Um dies zu verhindern, besteht eine bekannte Lösung darin, zwischen den beiden Platten transparente oder dunkle Abstandshalter anzuordnen, die meist aus Glas oder Kunststoff hergestellt und mittels Kleben oder durch elastische Klemmung zwischen den beiden Platten befestigt sind. Derartige LCD-Zellen sind beispielsweise der JP 08 304832 A, der JP 08 015708 A und der EP-B 0 311 441 B1 bekannt. Aus der US 5,851,605 B ist die Verwendung von klebenden Anstandshaltern bei LCD-Anzeigen bekannt. Diese Abstandshalter verhindern eine Annäherung der Platten im oberen Bereich und damit ein Auseinandergehen im unteren Bereich. Diese Materialien weisen jedoch einen gegenüber dem Flüssigkristall deutlich (beispielsweise um ein bis zwei Größenordnungen) geringeren Wärmeausdehnungskoeffizienten α = (V-V₀)/[V(t-t₀)] auf, wobei V bzw. V₀ das Volumen eines Körpers bei der Temperatur t bzw. t₀ bezeichnet.

Erwärmt sich die LCD-Zelle nun deutlich (beispielsweise von 20°C auf 85°C), so dehnt sich der Flüssigkristall wesentlich stärker aus als die Abstandshalter und drückt infolgedessen die transparenten Platten auseinander, wodurch sich an den Platten durch Kleben befestigte Abstandshalter von den Platten zumindest einseitig lösen bzw. zwischen den Platten eingeklemmte Abstandshalter sich deutlich entspannen. Der Flüssigkristall sackt dann infolge der Gravitation unter einem weiterem Auseinanderdrücken des unteren und relativ dazu einem Zusammengehen des oberen Bereichs der Platten nach unten, was zu unerwünschten Farbunregelmäßigkeiten bei höheren Temperaturen führt.

Kühlt andererseits die LCD-Zelle deutlich (beispielsweise von 20°C auf -30°C) ab, zieht sich der Flüssigkristall stärker zusammen als die Abstandshalter. Die Platten können daher der Volumenverringerung des Flüssigkristalls nicht ausreichend folgen, es kommt an einzelnen Stellen zu Vakuumblasen im Flüssigkristall, die widerum störend sichtbar sind. Sind andererseits die Abstandshalter so weich, daß eine der Volumenverringerung des Kristalls entsprechende elastische Volumenänderung der Zelle möglich ist, führt dies zu einer unerwünschten makroskopischen Änderungen der Schichtdicke (Abstand der beiden einander zugewandten Oberflächen der transparenten Platten, "Cell-Gap") der LCD-Zelle. Um diese Blasenbildung bei tiefen Temperaturen zu vermeiden ist es der JP 08 304832 A, der JP 08 015708 A und der EP-B 0 311 441 B1 bekannt unterschiedliche große Abstandshalter zu verwenden.

Wärmeausdehnungskoeffizienten von Werkstoffen wie sie üblicherweise für Abstandshalter verwendet werden, sind aus "Standard Test Method for Coefficient of Linear Thermal Expansion of Plastics between -30°C und 30°C with a Vitreous Silica Dilatometer", ASTM Designation D696-98, ASTM International, US, Seiten 1 - 5 bekannt.

Sind die Abstandshalter nicht durch Kleben, sondern durch elastische Klemmung zwischen den beiden Platten befestigt, so führen diese Abstandshalter bei Vibrationen der LCD-Zelle, etwa bei einem üblichen Vibrationstest oder im mobilen Betrieb, darüber hinaus Mikrobewegungen aus, die zu unerwünschten Kratzer auf der Oberfläche der transparenten Platten führen. Dieses Problem verstärkt sich bei höheren Temperaturen, wenn die Abstandshalter aufgrund der Ausdehnung der LCD-Zelle weniger stark geklemmt sind.

Der Erfindung liegt daher die Aufgabe zugrunde, eine LCD-Zelle zu schaffen, bei der bei Temperaturschwankungen über den Betriebsbereich der Zelle kaum Farbunregelmäßigkeiten und Vakuumblasen auftreten und bei der Vibrationen der LCD-Zelle kaum zu Kratzern durch die Abstandshalter führen.

Diese Aufgabe wird durch die Merkmale des Anspruchs 1 gelöst.

In einer LCD-Zelle nach der vorliegenden Erfindung umfassen die Abstandshalter erste kleinere Abstandshalter und zweite größere Abstandshalter, die sich voneinander wenigstens durch ihre Materialeigenschaften und ihre geometrischen Abmessungen unterscheiden. Durch eine entsprechende örtliche und quantitative Verteilung kann so über der gesamten Fläche der LCD-Zelle eine lokal unterschiedliche Steifigkeit und/oder eine lokal unterschiedliche Wärmeausdehungseigenschaft eingestellt sein. Die Abmessungen der Abstandshalter sind so gewählt, dass die meisten der ersten Abstandshalter zumindest in Richtung senkrecht zu den beiden Platten eine kleinere Abmessung als die meisten der zweiten Abstandshalter aufweisen. Zusätzlich ist die Abmessung der zweiten Abstandshalter in Richtung senkrecht zu den beiden Platten so gewählt, dass sie im unverformten Zustand bei 85°C größer ist als der Abstand der einander zugewandten Oberflächen der Platten. Hierdurch wird gewährleistet, dass die meisten der zweiten Abstandshalter stets sicher zwischen den beiden Platten geklemmt sind.

Eine vorteilhafte Ausgestaltung der Erfindung besteht darin, dass für die Abmessungen der Abstandshalter gilt: µ₁ + i · σ₁ < µ₂ - i · σ₂ , i=1,2,3 wobei µ₁ bzw. µ₂ den Mittelwert der Abmessung der ersten bzw. zweiten Abstandshalter in Richtung senkrecht zu den beiden Platten und σ₁ bzw. σ₂ die zugehörige Standardabweichung bezeichnet.

Durch lokal geringere Steifigkeiten kann die LCD-Zelle bei Abkühlung lokal der Volumenänderung des Flüssigkristalls elastisch folgen, was das Entstehen von Vakuumblasen im Kristall vermeidet. Andererseits garantieren lokal größere Steifigkeiten makroskopisch eine gleichbleibende Schichtdicke der Zelle. Ein ähnlicher Effekt wird durch eine lokal unterschiedliche Wärmeausdehnung erzielt, indem Bereiche mit einer hohen Wärmeausdehnung dem Flüssigkristall besser folgen und so die Bildung von Vakuumblasen verhindern, während Bereiche mit einer geringeren Wärmeausdehnung makroskopisch eine gleichbleibende Gestalt der Zelle gewährleisten. Vorteilhafterweise sind beide Effekte miteinander verknüpft, indem lokal steifere Bereiche auch eine geringere Wärmeausdehnung aufweisen und lokal nachgiebigere Bereiche auch eine höhere Wärmeausdehnung aufweisen.

Die geringere bzw. höhere Steifigkeit bzw. Wärmeausdehnung kann vorzugsweise durch Verwendung von Abstandshaltern aus verschiedenen Materialien erzielt werden, wobei erste Abstandshalter aus einem steiferen Material zweckmäßigerweise einen kleineren Wärmeausdehnungskoeffizienten α und zumindest in der Richtung senkrecht zu den einander zugewandten inneren Oberflächen der transparenten Platten eine Abmessung aufweisen, die dem Abstand zwischen den inneren Oberflächen der beiden transparenten Platten entspricht. Steifer bedeutet in diesem Zusammenhang einen größeren Kompressionsmodul K = |Δp·V/ΔV|, wobei Δp eine Änderung des auf einen Körper wirkenden Drukkes und ΔV eine entsprechende Änderung seines Volumens V bezeichnet. Solche ersten Abstandshalter können beispielsweise aus Glas hergestellt und durch Kleben an den inneren Oberflächen der transparenten Platten befestigt sein. Zweite Abstandshalter bestehen dann vorzugsweise aus einem elastischeren Material (d.h. mit kleinerem Kompressionsmodul K) mit einem größeren Wärmeausdehnungskoeffizienten α und weisen im unverformten Zustand auch bei den höchstem im Betrieb der LCD-Zelle vorkommenden Temperaturen in Richtung senkrecht zu den beiden Platten eine Abmessung auf, die deutlich größer ist als der dann vorliegende Abstand der inneren Oberflächen der beiden transparenten Platten. Solche zweiten Abstandshalter können beispielsweise aus transparentem oder dunklem Kunststoff hergestellt und durch elastische Klemmung zwischen den beiden transparenten Platten befestigt sein. Durch eine entsprechende örtliche Verteilung dieser ersten und zweiten Abstandshaltern in einem geeignet gewählten quantitativen Verhältnis kann dann eine lokal unterschiedliche Steifigkeit und Wärmedehnung zwischen den beiden transparenten Platten ausgebildet sein und die LCD-Zelle zeigt, wie oben dargelegt, bei tiefen Temperaturen keine Vakuumblasen oder makrospokischen Schichtdickenänderungen. Zusätzlich wirken die ersten, steiferen Abstandshalter bei Vibrationen der LCD-Zelle amplitudenbegrenzend.

Eine solcherart realisierte lokal unterschiedliche Steifigkeits- und Wärmedehungsverteilung ist auch bei höheren Temperaturen vorteilhaft: bei Erwärmung dehnt sich der Flüssigkristall stark aus und drückt so die beiden transparenten Platten auseinander. Die elastischeren zweiten Abstandshalter folgen dieser Bewegung, bleiben jedoch aufgrund ihrer im unverformten Zustand größeren Abmessung in Richtung senkrecht zu den beiden Platten weiterhin zwischen den Platten geklemmt, so daß sie auch bei Vibrationen keine Mikrobewegungen durchführen, was zu Kratzern auf den inneren Oberflächen der Platten führen würde. Gleichzeitig verhindern diese zweiten Abstandshalter auch bei höheren Temperaturen ein Nach-Unten-Sacken des Flüssigkristalls in der Zelle infolge der Gravitation, insbesodere bei vertikaler Einbaulage (oder infolge Trägheitskräften), da, wie oben beschrieben, ein stärkeres Auseinandergehen der beiden Platten im unteren Bereich stets ein relatives Zusammengehen im oberen Bereich bedingt, das aber durch die im oberen Bereich vorhandenen zweiten Abstandshalter verhindert wird, die aufgrund ihrer Abmessung in Richtung senkrecht zu den beiden Platten weiterhin komprimiert sind und einem Zusammengehen der Platten aufgrund ihrer elastischen Deformation eine ausreichende Gegenkraft entgegensetzten. Somit kann sich die Zelle nicht derart verformen, daß der Flüssigkristall nach unten sackt und eine daraus resultierende Farbunregelmäßigkeit wird ebenso wie Kratzer auf den inneren Oberflächen der Platten infolge Vibrationen bei höheren Temperaturen verhindert. Die ersten Abstandshalter können dabei aufgrund ihrer kleineren Abmessung in Richtung senkrecht zu den beiden Platten und ihres geringeren Wärmeausdehnungskoeffizienten dem nahezu parallelen Auseinandergehen der Platten in Richtung senkrecht zu den beiden Platten nicht folgen und lösen sich einseitig von einer der beiden Platten. Sie bleiben jedoch an der anderen Platte durch Kleben fixiert und werden so in ihrer Position gehalten. Aufgrund ihrer größeren Steifigkeit in Richtung senkrecht zu den beiden Platten dienen sie gleichzeitig vorteilhaft als amplitudenbegrenzenter Anschlag zur Dämpfung von Schwingungen der beiden Platten in Richtung senkrecht zu den beiden Platten infolge Vibrationen der LCD-Zelle.

Im wesentlichen entspricht also die Erfindung einer Parallelschaltung örtlich in einem geeigneten Verhältnis verteilter weicherer und härterer Federn mit unterschiedlicher Vorspannung und/oder Wärmedehnung.

Damit weißt die Erfindung einer Reihe von Vorteilen auf:
in höheren Temperaturbereichen ergeben sich keine oder nur geringe Farbunregelmäßigkeiten der LCD-Anzeige;
bei tieferen Temperaturen treten keine oder nur wenige Vakuumblasen auf;
darüber hinaus verändert sich die makroskopische Schichtdicke der LCD-Zelle auch bei tiefen Temperaturen relativ wenig;
Kratzer durch Mikrobewegungen von Abstandshaltern etwa bei Vibrationen der Zelle infolge von Vibrationstests, mobilem Einsatz oder dergleichen werden vermieden; und
Schwingungen der transparenten Platten in lateraler Richtung werden durch einen amplitudenbegrenzenden Anschlag verringert.

Weitere Vorteile, Merkmale und Ausführungen ergeben sich aus den Unteransprüchen und den Zeichnungen, in denen:
Fig. 1 einen Längsschnitt durch eine LCD-Zelle nach einer Ausführung der Erfindung bei einer tiefen Temperatur zeigt;
Fig. 2 einen Längsschnitt durch eine LCD-Zelle nach einer Ausführung der Erfindung bei einer mittleren Temperatur zeigt;
Fig. 3 einen Längsschnitt durch eine LCD-Zelle nach einer Ausführung der Erfindung bei einer hohen Temperatur zeigt; und
Fig. 4 einen Schnitt einer LCD-Zelle nach einer Ausführung der Erfindung entlang der Linie A-A in Fig. 2 zeigt.

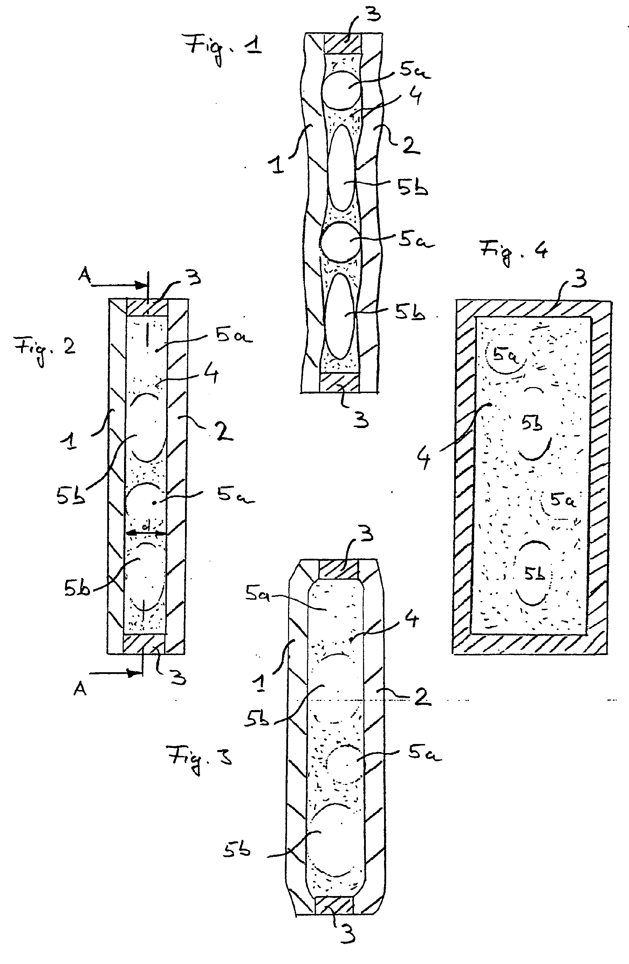

In Figur 2 umfaßt eine LCD-Zelle zwei parallele transparente Platten 1 bzw. 2 und eine am Umfang der Platten angeordnete Abdichtung 3. In der so ausgebildeten Zelle sind ein Flüssigkristall 4, erste Abstandshalter 5a und zweite Abstandshalter 5b angeordnet. Bei der in Fig. 2 dargestellten mittleren Temperatur von beispielsweise 20°C entspricht die Abmessung der ersten, steiferen Abstandshalter 5a in Richtung senkrecht zu den beiden Platten im wesentlichen dem Abstand d der einander zugewandten inneren Oberflächen der Platten 1 und 2. Die ersten Abstandshalter 5a sind durch Kleben zumindest an einer inneren Oberfläche der Platten 1 bzw. 2 befestigt. Die Abmessung der zweiten, weicheren Abstandshalter 5b in Richtung senkrecht zu den beiden Platten ist in deren unverformtem Zustand größer als dieser Abstand d, sie sind also bei mittleren Temperaturen elastisch verformt und dadurch zwischen den Platten 1 und 2 geklemmt. Der Flüssigkristall will infolge der Gravitation nach unten sakken und dazu die Platten 1 und 2 im unteren Bereich in Richtung senkrecht zu den beiden Platten auseinanderdrücken. Dies wird dadurch verhindert, daß im oberen Bereich sowohl die ersten als auch die zweiten Abstandshalter in Richtung senkrecht zu den beiden Platten eine geeignete Gegenkraft auf die Platten 1 und 2 ausüben, was einer Parallelschaltung von Federn entspricht. Fig. 4 zeigt in einem Schnitt entlang der Linie A-A in Fig. 2 eine mögliche lokale Verteilung der ersten und zweiten Abstandshalter 5a und 5b innerhalb des Flüssigkristalls 4.

Kühlt die LCD-Zelle ab, beispielsweise auf -30°C, so zieht sich der Flüssigkristall 4 stark zusammen. Wie in Fig. 1 dargestellt, kann die LCD-Zelle dieser Volumenverkleinerung des Kristalls 4 lokal in den Bereichen folgen, in denen zweite Abstandshalter 5b angeordnet sind, so daß eine Vakuumblasenbildung im Flüssigkristall 4 verhindert wird. Die zweiten Abstandshalter 5b werden dabei entsprechend ihrer Wärmeausdehnung stärker als bei mittleren Temperaturen, jedoch vorteilhafterweise noch immer im elastischen Bereich verformt.

In Bereichen mit ersten Abstandshaltern 5a behalten diese aufgrund ihres kleineren Wärmeausdehnungskoeffizienten α und ihrer höheren Steifigkeit im wesentlichen ihre Form und verhindern so eine makroskopische Schichtdickenänderung der Zelle. Zusätzlich wirken die ersten Abstandshalter 5a als amplitudenbegrenzenter Anschlag bei Schwingungen der beiden Platten 1 und 2 in Richtung senkrecht zu den beiden Platten .

In Fig. 3 weist die LCD-Zelle eine höhere Temperatur, beispielsweise 85°C auf. Aufgrund der hohen Wärmeausdehnung des Flüssigkristalls 4 sind hier die Platten 1 und 2 in Richtung senkrecht zu den beiden Platten auseinandergedrückt. Aufgrund ihrer Abmessung in Richtung senkrecht zu den beiden Platten und ihres Wärmeausdehnungskoeffizienten sind jedoch die zweiten Abstandshalter 5b auch bei dieser Temperatur noch elastisch verformt und zwischen den Platten 1 und 2 geklemmt. Daher verhindern die im oberen Bereich angeordneten zweiten Abstandshalter 5b durch Aufprägen elastischer Gegenkräfte in Richtung senkrecht zu den beiden Platten ein Zusammengehen der Platten 1 und 2 im oberen Bereich, auf diese Weise ein weiteres Auseinandergehen der Platten in Richtung senkrecht zu den beiden Platten im unteren Bereich und somit eine Schichtdickenzunahme im unteren Bereich mit entsprechenden unerwünschten Farbunregelmäßigkeiten. Die ersten Abstandshalter 5a haben sich aufgrund ihrer geringeren Wärmeausdehnung und höheren Steifigkeit einseitig von den Platten 1 bzw. 2 gelöst, dämpfen aber als amplitudenbegrenzenter Anschlag von Schwingungen der Platten 1 und 2 in Richtung senkrecht zu den beiden Platten infolge von Vibrationen der LCD-Zelle.

### Bezugszeichenliste:

- 1: erste Platte
- 2: zweite Platte
- 3: Abdichteinrichtung
- 4: Flüssigkristall
- 5a: erste Abstandshalter
- 5b: zweite Abstandshalter
- d: Schichtdicke

## Patentansprüche

1. LCD-Zelle mit
einer ersten transparenten Platte (1),
einer parallel dahinter angeordneten zweiten transparenten Platte (2),
einem zwischen der ersten und der zweiten Platte (1, 2) angeordneten Flüssigkristall (4),
einer zwischen der ersten und der zweiten Platte (1, 2) angeordneten, den Flüssigkristall (4) einschließenden Abdichtungseinrichtung (3), und
zwischen den beiden Platten (1, 2) angeordneten ersten Abstandshaltern (5a) und zweiten Abstandshaltern (5b),
wobei sich die ersten und zweiten Abstandshalter (5a, 5b) in ihren Abmessungen im unveformten Zustand und ihren Materialeigenschaften unterscheid, und
wobei die Abmessungen der Abstandshalter (5a, 5b) im unveformten Zustand in richtung senkrecht zu den beiden Platten so gewählt sind, dass die meisten der ersten Abstandshalter (5a) kleiner als die meisten der zweiten Abstandshalter (5b) sind,
**dadurch gekennzeichnet,**
**dass** die Abmessung der zweiten Abstandshalter (5b) in Richtung senkrecht zu den beiden Platten so gewählt ist, dass sie im unverformten Zustand bei 85°C größer ist als der Abstand der einander zugewandten Oberflächen der Platten (1, 2).

2. LCD-Zelle nach Anspruch 1, **dadurch gekennzeichnet, dass** die ersten Abstandshalter (5a) in Richtung senkrecht zu den beiden Platten (1 bzw. 2) eine Abmessung aufweisen, die im wesentlichen dem Abstand der einander zugewandten Oberflächen der beiden Platten (1, 2) entspricht.

3. LCD-Zelle nach Anspruch 1, **dadurch gekennzeichnet, dass** der Kompressionsmodul der ersten Abstandshalter (5a) deutlich über dem des Flüssigkristalls (4) liegt.

4. LCD-Zelle nach Anspruch 3, **dadurch gekennzeichnet, dass** die ersten Abstandshalter (5a) in Richtung senkrecht zu den beiden Platten eine Steifigkeit in der Größenordnung der Steifigkeit von Glas oder höher aufweisen.

5. LCD-Zelle nach Anspruch 1, **dadurch gekennzeichnet, dass** die ersten Abstandshalter (5a) einen deutlich niedrigeren Wärmeausdehnungskoeffizienten als der Flüssigkristall (4) aufweisen.

6. LCD-Zelle nach Anspruch 1, **dadurch gekennzeichnet, dass** die ersten Abstandshalter (5a) an wenigstens einer der einander zugewandten Oberflächen der Platten (1, 2) durch Kleben befestigt sind.

7. LCD-Zelle nach Anspruch 1, **dadurch gekennzeichnet, dass** die zweiten Abstandshalter (5b) zumindest in Richtung senkrecht zu den beiden Platten eine geringere Steifigkeit als die Steifigkeit der ersten Abstandshalter (5a) aufweisen.

8. LCD-Zelle nach Anspruch 1, **dadurch gekennzeichnet, dass** die zweiten Abstandshalter (5b) einen höheren Wärmeausdehnungskoeffizienten als die ersten Abstandshalter (5a) aufweisen.

9. LCD-Zelle nach Anspruch 1, **dadurch gekennzeichnet, dass** die Verteilung der Abstandshalter (5a, 5b) so gewählt ist, dass eine definierte Elastizität zwischen der ersten Platte (1) und der zweiten Platte (2) vorhanden ist.

10. LCD-Zelle nach Anspruch 1, **dadurch gekennzeichnet, dass** die Verteilung der Abstandshalter (5a, 5b) so gewählt ist, dass eine definierte Wärmeausdehnungsfähigkeit zwischen der ersten Platte (1) und der zweiten Platte (2) vorhanden ist.

11. LCD-Zelle nach Anspruch 1, **dadurch gekennzeichnet, dass** die Summe des Mittelwertes der Abmessung in Richtung senkrecht zu den beiden Platten der ersten Abstandshalter (5a) und dessen dreifache Standardabweichung kleiner ist als die Differenz des Mittelwertes der Abmessung der zweiten Abstandshalter (5b) in Richtung senkrecht zu den beiden Platten und dessen dreifacher Standardabweichung.

12. LCD-Zelle nach Anspruch 1, **dadurch gekennzeichnet, dass** die Summe des Mittelwertesder Abmessung der ersten Abstandshalter (5a) in Richtung senkrecht zu den beiden Platten und dessen Standardabweichung kleiner ist als die Differenz des Mittelwertes der Abmessung der zweiten Abstandshalter (5b) in Richtung senkrecht zu den beiden Platten und dessen Standardabweichung.

## Claims

1. An LCD cell with
a first transparent plate (1),
a second parallel, transparent plate (2) parallel to and located behind the first transparent plate (1),
a liquid crystal (4) placed between the first and the second plates (1, 2),
a sealing means (3) placed between the first and second plates (1, 2) so as to enclose the liquid crystal (4), and
first spacers (5a) and second spacers (5b) placed between the two plates (1, 2), wherein the first spacers (5a) and second spacers (5b) differ in their dimensions in their undeformed condition and in the properties of their materials, and
wherein the dimensions of the spacers (5a, 5b) in their undeformed condition in a direction perpendicular to the two plates are selected such that the majority of the first spacers (5a) are smaller than the majority of the second spacers (5b),
**characterized in that**
the dimension of the second spacers (5b) in a direction perpendicular to the two plates is selected such that in their undeformed condition at 85°C it is greater than the distance of the opposing surfaces of the plates (1, 2).

2. The LCD cell according to claim 1, **characterized in that** the first spacers (5a), in a direction perpendicular to the two plates (1, 2), exhibit a dimension which essentially corresponds to the distance between the opposing surfaces of the two plates (1, 2).

3. The LCD cell according to claim 1, **characterized in that** the compression module for the first spacers (5a) is clearly higher than that of the liquid crystal (4).

4. The LCD cell according to claim 3, **characterized in that** the first spacers (5a), in a direction perpendicular to the two plates, possess a rigidity in the order of the rigidity of glass or higher.

5. The LCD cell according to claim 1, **characterized in that** the first spacers (5a) possess a clearly lower heat expansion coefficient than the liquid crystal (4).

6. The LCD cell according to claim 1, **characterized in that** the first spacers (5a) are affixed to at least one of the opposing surfaces of the plates (1, 2) by bonding.

7. The LCD cell according to claim 1, **characterized in that** the second spacers (5b), at least in a direction perpendicular to the two plates, possess a rigidity that is lower than the rigidity of the first spacers (5a).

8. The LCD cell according to claim 1, **characterized in that** the second spacers (5b) possess a higher heat expansion coefficient than the first spacers (5a).

9. The LCD cell according to claim 1, **characterized in that** the distribution of the spacers (5a, 5b) is selected such that a defined elasticity exists between the first plate (1) and the second plate (2).

10. The LCD cell according to claim 1, **characterized in that** the distribution of the spacers (5a, 5b) is selected such that a defined heat expansion capability exists between the first plate (1) and the second plate (2).

11. The LCD cell according to claim 1, **characterized in that** the sum of the average value of the dimension in a direction perpendicular to the two plates of the first spacers (5a) and the threefold variance thereof is less than the difference of the average value of the dimension of the second spacers (5b) in a direction perpendicular to the two plates and the threefold variance thereof.

12. The LCD cell according to claim 1, **characterized in that** the sum of the average values of the dimension of the first spacers (5a) in a direction perpendicular to the two plates and the variance thereof is less than the difference of the average value of the dimension of the second spacers (5b) in a direction perpendicular to the two plates and the variance thereof.

## Revendications

1. Cellule d'affichage à cristal liquide présentant
une première plaque (1) transparente,
une seconde plaque (2) transparente disposée parallèlement derrière,
un cristal liquide (4) disposé entre la première et la seconde plaque (1, 2),
un dispositif d'étanchéité (3) entourant le cristal liquide (4), disposé entre la première et la seconde plaque (1, 2), et
des premiers écarteurs (5a) disposés entre les deux plaques (1, 2) et des seconds écarteurs (5b),
les premiers et les seconds écarteurs (5a, 5b) se distinguant dans leurs dimensions à l'état non déformé et leurs propriétés de matière, et
les dimensions des écarteurs (5a, 5b) à l'état non déformé étant choisies perpendiculairement aux deux plaques de telle sorte que la plupart des premiers écarteurs (5a) soit inférieure à la plupart des seconds écarteurs (5b),
**caractérisée en ce que** la dimension des seconds écarteurs (5b) est choisie perpendiculairement aux deux plaques de telle sorte qu'elle soit supérieure à l'état non déformé à 85 °C à la distance entre lés surfaces des plaques (1, 2) tournées l'une vers l'autre.

2. Cellule à affichage à cristal liquide selon la revendication 1, **caractérisée en ce que** les premiers écarteurs (5a) présentent perpendiculairement aux deux plaques (1 ou 2) une dimension qui correspond essentiellement à la distance entre les surfaces des deux plaques (1, 2) tournées l'une vers l'autre.

3. Cellule à affichage à cristal liquide selon la revendication 1, **caractérisée en ce que** le module de compressibilité des premiers écarteurs (5a) se trouve nettement au-dessus de celui du cristal liquide (4).

4. Cellule à affichage à cristal liquide selon la revendication 3, **caractérisée en ce que** les premiers écarteurs (5a) présentent perpendiculairement aux deux plaques une rigidité de l'ordre de la rigidité du verre ou supérieure.

5. Cellule à affichage à cristal liquide selon la revendication 1, **caractérisée en ce que** les premiers écarteurs (5a) présentent un coefficient de dilatation thermique nettement plus faible que le cristal liquide (4).

6. Cellule à affichage à cristal liquide selon la revendication 1, **caractérisée en ce que** les premiers écarteurs (5a) sont fixés par collage sur au moins l'une des surfaces tournées l'une vers l'autre des plaques (1, 2).

7. Cellule à affichage à cristal liquide selon la revendication 1, **caractérisée en ce que** les seconds écarteurs (5b) présentent au moins perpendiculairement aux deux plaques une rigidité plus faible que la rigidité des premiers écarteurs (5a).

8. Cellule à affichage à cristal liquide selon la revendication 1, **caractérisée en ce que** les seconds écarteurs (5b) présentent un coefficient de dilatation thermique supérieur à celui des premiers écarteurs (5a).

9. Cellule à affichage à cristal liquide selon la revendication 1, **caractérisée en ce que** la répartition des écarteurs (5a, 5b) est choisie de telle sorte qu'une élasticité définie existe entre la première plaque (1) et la seconde plaque (2).

10. Cellule à affichage à cristal liquide selon la revendication 1, **caractérisée en ce que** la répartition des écarteurs (5a, 5b) est choisie de telle sorte qu'une capacité de dilatation thermique définie existe entre la première plaque (1) et la seconde plaque (2).

11. Cellule à affichage à cristal liquide selon la revendication 1, **caractérisée en ce que** la somme de la valeur moyenne de la dimension perpendiculaire aux deux plaques des premiers écarteurs (5a) et de leur triple écart type est inférieure à la différence de la valeur moyenne de la dimension des seconds écarteurs (5b) perpendiculaire aux deux plaques et de leur triple écart type.

12. Cellule à affichage à cristal liquide selon la revendication 1, **caractérisée en ce que** la somme de la valeur moyenne de la dimension des premiers écarteurs (5a) perpendiculaire aux deux plaques et de leur écart type est inférieure à la différence de la valeur moyenne de la dimension des seconds écarteurs (5b) perpendiculaire aux deux plaques et de leur écart type.
